## Europäisches Patentamt

## European Patent Office

## Office européen des brevets

(19)

(11) **EP 0 684 479 B1**

(12) **FASCICULE DE BREVET EUROPEEN**

(45) Date de publication et mention
de la délivrance du brevet:
**21.04.1999 Bulletin 1999/16**

(51) Int Cl.⁶: **G01P 1/00**, G01P 15/10

(21) Numéro de dépôt: **95410051.7**

(22) Date de dépôt: **23.05.1995**

(54) **Microaccéléromètre à résonateur compensé en température**

Mikrobeschleunigungsmessaufnehmer mit temperaturkompensiertem Resonator

Microaccelerometer with temperature compensated resonator

(84) Etats contractants désignés:
**DE GB**

(30) Priorité: **27.05.1994 FR 9406726**

(43) Date de publication de la demande:
**29.11.1995 Bulletin 1995/48**

(73) Titulaire: **SEXTANT Avionique**
**92366 Meudon la Forêt Cedex (FR)**

(72) Inventeurs:
• **Fima, Henri**
**F-26120 Malissard (FR)**
• **Legoux, Christophe**
**F-26000 Valence (FR)**

(74) Mandataire: **de Beaumont, Michel**
**1bis, rue Champollion**
**38000 Grenoble (FR)**

(56) Documents cités:
**EP-A- 0 479 686**        WO-A-90/10237
**US-A- 5 186 053**

## Description

La présente invention concerne un microaccéléromètre du type formé à partir d'une plaque d'un matériau tel que du quartz ou du silicium gravée de façon à délimiter une masse sismique maintenue sur un cadre par des suspensions et reliée à ce cadre par des lames formant résonateurs.

Un exemple d'un tel microaccéléromètre est décrit dans le brevet américain US-A-5 261 277 de la demanderesse. Il est exposé dans ce brevet américain comment un microaccéléromètre peut être constitué à partir d'une plaque d'un matériau mince tel que du silicium ou du quartz prise entre deux plaques formant couvercles supérieur et inférieur et comment une masse mobile formée dans la plaque centrale est liée au cadre de cette plaque centrale par des suspensions et par des lames formant résonateurs. Les lames formant résonateurs sont couplées capacitivement à des métallisations formées sur l'une ou l'autre des plaques formant couvercles.

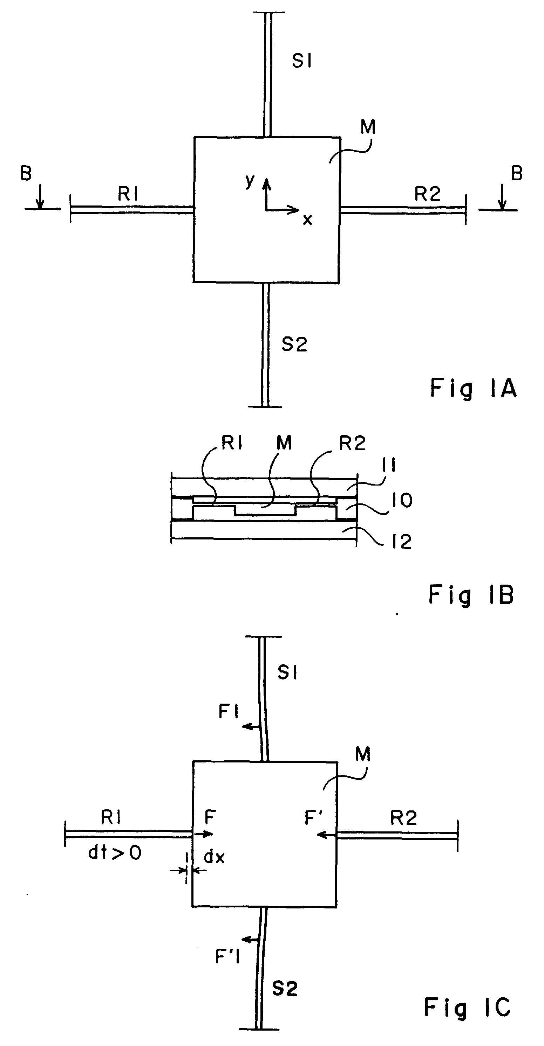

Les figures 1A à 1C illustrent de façon très schématique une structure de masse mobile M, ses suspensions S1 et S2 et ses résonateurs R1 et R2. La structure n'est pas la même que celle du brevet américain susmentionné mais est encore simplifiée pour mieux faire ressortir le problème que l'invention vise à résoudre. Les bras de suspension S1 et S2 s'étendent selon un axe y et les lames formant résonateurs R1 et R2 s'étendent selon un axe x orthogonal à l'axe y. Les bras S1 et S2 sont conformées pour présenter une forte raideur selon un axe z perpendiculaire au plan x,y et être très souples dans la direction de l'axe x. Ainsi, quand la masse M est soumise à une accélération orientée selon l'axe x, elle pourra se déplacer légèrement dans cette direction, la lame de résonateur R1 étant sollicitée en extension et la lame R2 en compression. Ces contraintes sur les lames de résonateurs modifient leurs fréquences de résonance et la variation de fréquence caractérise l'accélération.

La figure 1B représente très schématiquement l'assemblage d'une plaque d'accéléromètre selon la présente invention dans une vue en coupe selon la ligne BB de la figure 1A. La masse sismique M est découpée dans une plaque intermédiaire comprenant un cadre 10 disposé entre deux plaques formant couvercles de protection 11 et 12, la plaque 11 comprenant des conducteurs électriques agencés pour exciter et détecter la résonance des résonateurs R1 et R2, eux-mêmes métallisés ou conducteurs (voir US-A-5 261 277).

On va maintenant examiner en relation avec la figure 1C l'influence d'une inhomogénéité de température dans l'enceinte où est situé l'accéléromètre. On suppose plus particulièrement, que la lame de résonateur R1 est à une température supérieure de $\Delta T$ à la lame de résonateur R2. Alors, cette lame R1 tend à se dilater et, sous l'effet de la réaction de la lame R2, sera sollicitée en compression comme la lame R2. Ainsi, la masse sismique M est soumise à la force F produite par la dilatation de la lame R1, à la force de réaction F' de la lame R2 et à des forces de rappel F1 et F'1 des suspensions S1 et S2. Il est clair que les forces de torsion F1 et F'1 sont négligeables devant les forces de compression F et F'. On a donc en première approximation à l'équilibre F+F'=0.

La force F s'exprime par :

$$F = E(\alpha L \Delta T - \Delta x)el/L$$

où

E est le module d'Young,
$\alpha$ le coefficient de dilatation du matériau des lames de résonateurs,
l la largeur des lames de résonateurs,
$\Delta T$ la différence de température,
$\Delta x$ le déplacement de la masse sismique,
e l'épaisseur des lames de résonateurs, et
L la longueur de ces lames.

La force F' s'exprime par :

$$F' = - Eel/L\Delta x.$$

F+F'=0 conduit à :

$$\Delta x = \alpha L \Delta T/2,$$

et

$$F = Eel\alpha \Delta T/2.$$

Si on examine la conséquence d'une variation de température sur la fréquence propre f des résonateurs, on en conclut que, pour le premier résonateur

$$\delta f = KF,$$

et pour le deuxième

$$\delta f' = -K'F' \simeq -K'F = -(K+\Delta K)F.$$

On a supposé dans ce qui précède que le rapport entre la variation de fréquence et la force n'était pas strictement identique pour les deux résonateurs. En effet, les deux résonateurs présentent toujours inévitablement des différences structurelles. Ceci conduit à $\delta f - \delta f' = \Delta KF$. Par ailleurs, on sait que $\delta f - \delta f' = KM\delta\gamma$ où M désigne la masse de la masse sismique. Ainsi, l'accélération équivalente $\delta\gamma$ que l'on mesure en l'absence d'accélération mais quand l'un des résonateurs a une température différente de l'autre sera

$$\delta\gamma = (\Delta K/K)(F/M) = (\Delta K/K)Ee l\alpha\Delta T/2M. \qquad (1)$$

Considérons un exemple numérique dans le cas où la masse sismique et les résonateurs sont en silicium. On a alors $E=1,7\ 10^{11}\ N/m^2$, $\alpha=2,6\ 10^{-6}/$degré. On considère également le cas où $e=20\ \mu m$, $1=60\ \mu m$, $M=6,3\ 10^{-6}$ kg. Alors, si $\Delta K/K$ est de l'ordre de 5% (ce qui correspond à des tolérances de fabrication usuelles), on a pour une variation $\Delta T$ de 1/1000° un $\delta\gamma$ de 200 $\mu g$ (où g désigne l'accélération de la pesanteur).

En pratique, des écarts pouvant aller jusqu'à quelques centièmes de degrés entre les deux lames de résonateur sont loin d'être improbables. Ceci conduit à des erreurs de mesure d'accélération de l'ordre de 2 mg. De telles erreurs ne sont pas négligeables étant donné qu'un accéléromètre du type concerné peut couramment être utilisé pour atteindre des précisions meilleures que 1 mg.

Ainsi, la présente invention vise à prévoir un microaccéléromètre du type précédemment décrit insensible aux gradients de température.

Pour atteindre cet objet, la présente invention prévoit de modifier la structure du microaccéléromètre et plus particulièrement l'agencement de ses bras de suspension et de ses lames de résonateur pour qu'une dilatation liée à une variation de température de l'une des lames de résonateur n'entraîne pas une mise en compression des deux lames de résonateur.

Plus particulièrement, la présente invention prévoit un microaccéléromètre à résonateurs sensible à des accélérations dans une première direction formé à partir d'une plaque mince dont le plan comprend la première direction et une deuxième direction perpendiculaire à la première et est orthogonal à une troisième direction, comportant un cadre fixe, une masse sismique, deux bras de suspension entre le cadre et la masse, ces bras étant rigides dans la troisième direction et souples dans la première direction, deux lames formant résonateurs s'étendant entre le cadre et la masse selon la première direction. Les bras de suspension s'étendent sensiblement dans la deuxième direction et chacun est dirigé vers le centre de gravité de la masse symétriquement par rapport à ce centre ; les lames de résonateur sont parallèles mais non-colinéaires et symétriques par rapport au centre de gravité de la masse.

Selon un mode de réalisation de la présente invention, les bras de suspension sont colinéaires.

Selon un mode de réalisation de la présente invention, les bras de suspension ont sensiblement l'épaisseur de la plaque mince et les lames de résonateur ont une épaisseur fortement réduite par rapport à l'épaisseur de cette plaque mince.

Selon un mode de réalisation de la présente invention, la plaque mince est une plaque de silicium.

Selon un mode de réalisation de la présente invention, la plaque mince est une plaque de quartz.

La présente invention prévoit aussi un procédé de fabrication d'un microaccéléromètre à résonateurs sensible à des accélérations dans une première direction formé à partir d'une plaque mince dont le plan comprend la première direction et une deuxième direction perpendiculaire à la première et est orthogonal à une troisième direction, comportant un cadre, une masse sismique, deux bras de suspension entre le cadre et la masse, ces bras étant rigides dans la troisième direction et souples dans la première direction, deux lames formant résonateurs s'étendant entre le cadre et la masse selon la première direction. Selon ce procédé, la plaque mince est constituée d'un sandwich comprenant une première plaquette d'un premier matériau revêtue d'une couche mince d'un deuxième matériau et d'une couche mince d'un troisième matériau ; la masse et le cadre sont gravés dans l'ensemble de la plaque mince ; les suspensions sont gravées dans la première plaquette ; et les résonateurs sont gravés dans la couche mince du troisième matériau.

Selon un mode de réalisation de la présente invention, les premier et troisième matériaux sont du silicium et le deuxième matériau de l'oxyde de silicium.

Ces objets, caractéristiques et avantages ainsi que d'autres de la présente invention seront exposés en détail dans la description suivante de modes de réalisation particuliers faite à titre non-limitatif en relation avec les figures jointes parmi lesquelles :

les figures 1A à 1C, décrites précédemment, étaient destinées à rappeler l'état de la technique et à illustrer le problème posé ;
les figures 2A et 2B représentent une vue de dessus schématique d'un microaccéléromètre selon la présente invention ;
les figures 3A à 3C représentent une vue de dessus et des vues en coupe d'un mode de réalisation d'un microaccéléromètre selon la présente invention ; et
les figures 4A et 4B représentent une vue de dessus et une vue en coupe d'un autre mode de réalisation d'un microaccéléromètre selon la présente invention.

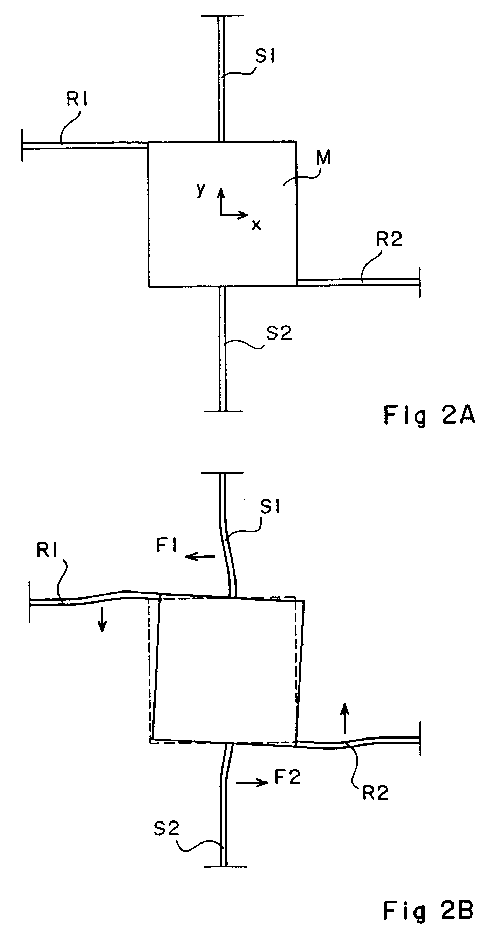

Comme le représente la figure 2A, dans un mode de réalisation de la présente invention, la masse sismique M est associée à deux bras de suspensions S1 et S2 colinéaires et passant par le centre de rotation qui correspond au centre de gravité de la masse M. Par contre, les lames de résonateur R1 et R2 au lieu d'être colinéaires et opposées l'une à l'autre de part et d'autre de la masse sismique sont toujours bien entendu orientées selon la direction de l'axe de détection x mais sont décalées l'une par rapport à l'autre, symétriquement par rapport au centre de gravité de la masse. Ainsi, dans cette structure, comme dans la structure précédente, une sollicitation de la masse M dans la direction x, résultant d'une accélération, entraînera une compression de l'un des résonateurs et une extension de l'autre sans mise en rotation de la masse sismique. Par contre, une dilatation de l'un des résonateurs, par exemple le résonateur R1, sous l'effet d'une variation de température entraînera comme le montre très schématiquement et à échelle agrandie la figure 2B une rotation de la masse sismique et des efforts de torsion sur les bras S1 et S2 et sur les lames R1 et R2, mais plus de force de compression longitudinale sur les résonateurs R1 et R2. Les déformations des lames de résonateurs R1 et R2 sont très exagérées dans la figure et les forces de déformation prédominantes seront les forces de torsion F1 et F2 des suspensions S1 et S2. Ainsi, l'erreur accélérométrique peut s'exprimer par l'expression :

$$M\delta\gamma = |\vec{F}1 + \vec{F}2| = \frac{Ee'l'^3}{L^3}\,\alpha L\Delta T = \frac{Ee'l'^3}{L^2}\,\alpha\Delta T. \qquad (2)$$

Dans cette équation (2), les paramètres e', l' et L se rapportent aux bras de suspension et non plus comme dans l'équation (1) aux lames de résonateurs. On considèrera par exemple le cas où L=3 mm, e'=0,3 mm et l'=20 μm. En conservant par ailleurs les valeurs numériques indiquées précédemment, on arrive pour une variation de température $\Delta T=10^{-3}$ degré à une erreur accélérométrique de seulement 2 μg, c'est-à-dire 100 fois plus faible que dans le cas précédent.

La structure des figures 2A et 2B ne constitue qu'un exemple de structure selon la présente invention. Plus généralement, la présente invention prévoit une structure telle que les efforts longitudinaux exercés sur les lames de résonateur R1 et R2 sont transformés en mouvement de rotation quand l'une des lames entre en dilatation. Pour cela, de l'avis actuel de la demanderesse, il faut satisfaire aux conditions suivantes :

-    les axes de poussée des résonateurs R1 et R2 sont décalés par rapport au centre de gravité de la masse,
-    les axes des suspensions S1 et S2 passent par le centre de gravité de la masse de telle sorte qu'une faible rotation de la masse autour de son centre de gravité n'entraîne aucune variation de longueur des suspensions.

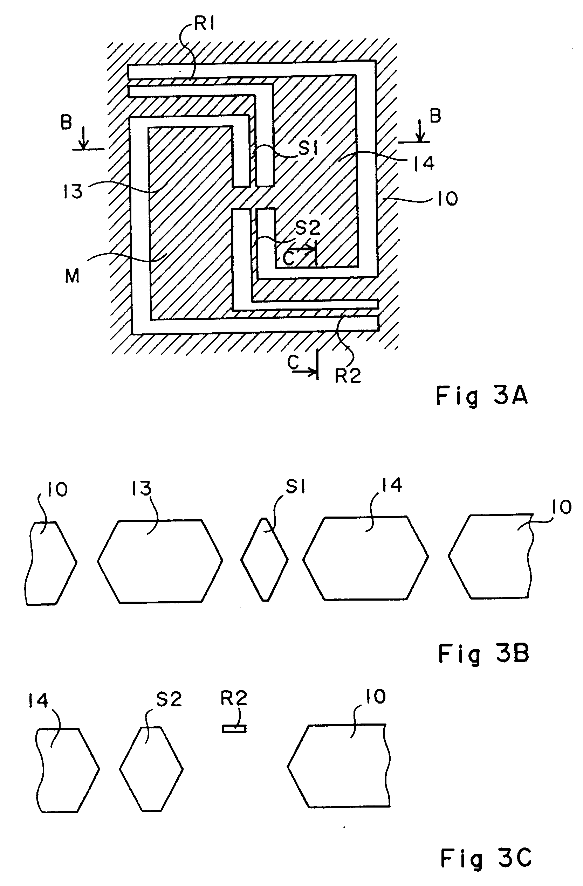

La figure 3A représente une vue de dessus schématique d'une variante de réalisation de la structure de la figure 3. La masse sismique M a sensiblement une forme de H. Les suspensions S1 et S2 sont colinéaires et dirigées sensiblement vers le centre du H parallèlement aux grands côtés de ce H. Les résonateurs R1 et R2 s'étendent de façon opposée à partir de chacune des branches du H. Chacun des résonateurs et des suspensions se raccorde à une partie périphérique de la plaque dans laquelle est formée la masse. Cette partie périphérique, ou cadre, est désignée par la référence 10.

La figure 3B est une vue en coupe selon la ligne BB de la figure 3A. Pour mieux comprendre cette vue en coupe, on se référera au brevet américain susmentionné. On rappellera que de telles structures peuvent être formées à partir d'une plaque de silicium ou de quartz. Dans le cas d'une plaque de silicium, on procèdera de préférence à des gravures anisotropes et l'on obtient alors une structure telle que celle illustrée en figure 3B où l'on voit de gauche à droite : le cadre 10, une branche 13 du H de la masse M, la suspension S1, une deuxième branche 14 du H, et à nouveau le cadre 10. On voit que ce type de gravure conduit à des suspensions très souples dans le sens latéral et très raides dans un sens perpendiculaire au plan de la masse sismique.

La figure 3C est une vue en coupe selon la ligne C-C de la figure 3A. On peut y voir une portion de la branche 14 du H, la suspension S2 à un endroit de grande largeur, c'est-à-dire à l'emplacement où elle ne présente pas de souplesse, une partie de la lame de résonateur R2 et le cadre 10. Le brevet américain susmentionné explique notamment la façon d'obtenir les parties de très faible épaisseur correspondant aux lames de résonateur.

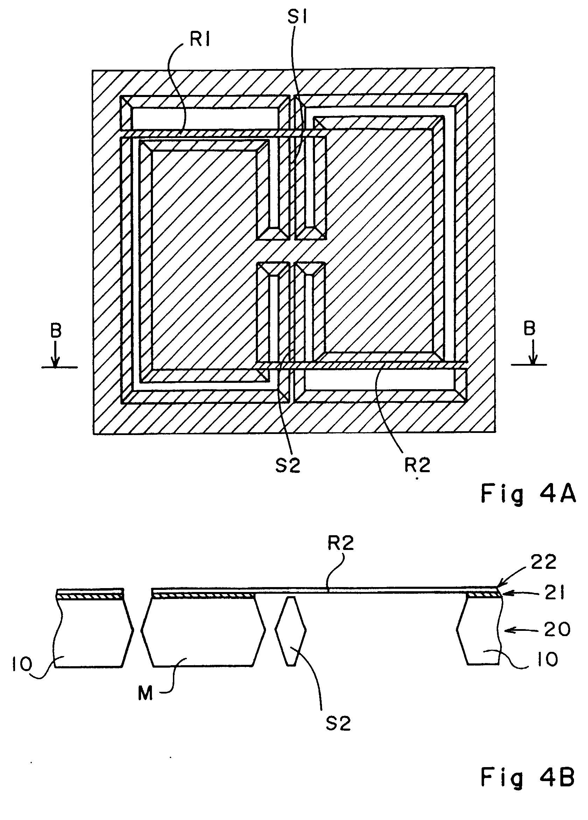

Les figures 4A et 4B illustrent une variante de réalisation de la structure de la figure 3A, cette variante de réalisation constituant quant à son mode de fabrication un aspect de la présente invention.

L'allure générale de la structure de la figure 4A est la même que celle de la figure 3A. La différence essentielle est que, au lieu d'être gravée à partir d'une plaque d'un matériau unique, telle qu'une plaque de silicium ou une plaque de quartz, la structure est gravée à partir d'une plaque de matériau composite comprenant par exemple une plaque 20 de silicium revêtue d'une couche mince 21 d'oxyde de silicium elle-même revêtue d'une couche mince 22 de silicium. La plaque 20 peut avoir l'épaisseur classique d'une plaquette de silicium soit environ 0,3 à 0,5 mm, la couche 21 d'oxyde de silicium une épaisseur de 2 à 10 μm et la couche 22 de silicium une épaisseur de 2 à 5 μm.

Comme le représente la vue en coupe de la figure 4B, prise selon la ligne BB de la figure 4A, le cadre et la masse sismique ont sensiblement toute l'épaisseur du sandwich 20, 21, 22 tandis que les bras de suspension sont définis dans la seule plaque 20 et les résonateurs dans la seule couche mince 22.

Par rapport au mode de réalisation précédent, ceci permet de simplifier la gravure des résonateurs. En effet, dans le mode de réalisation précédent, il fallait prévoir une gravure longue s'étendant jusqu'à laisser en place une épaisseur minime de silicium. Ici, l'épaisseur des résonateurs est prédéterminée par l'épaisseur de la couche mince de silicium ou autre matériau 22.

Un autre avantage du mode de réalisation des figures 4A et 4B est que, comme dans l'exemple représenté, il est possible de prévoir des structures géométriques dans lesquelles les bras de suspension et les lames de résonateurs se croisent. Il en résulte la possibilité de prévoir des structures plus compactes.

Bien entendu, la présente invention est susceptible de diverses variantes et modifications qui apparaîtront à l'homme de l'art, notamment en ce qui concerne le procédé de fabrication et les structures particulières permettant de compenser la dilatation selon les principes exposés dans la présente description.

**Revendications**

1.   Microaccéléromètre à résonateurs sensible à des accélérations dans une première direction (x) formé à partir d'une plaque mince dont le plan comprend la première direction (x) et une deuxième direction (y) perpendiculaire à la première et est orthogonal à une troisième direction (z), comportant :

   un cadre fixe (10),
   une masse sismique (M),
   deux bras de suspension (S1, S2) entre le cadre et la masse, ces bras étant rigides dans la troisième direction et souples dans la première direction,
   deux lames formant résonateurs (R1, R2) s'étendant entre le cadre et la masse selon la première direction,

   caractérisé en ce que :

   les bras de suspension (S1, S2) s'étendent sensiblement dans la deuxième direction et chacun est dirigé vers le centre de gravité de la masse symétriquement par rapport à ce centre ;
   les lames de résonateurs (R1, R2) sont parallèles mais non-colinéaires et symétriques par rapport au centre de gravité de la masse.

2.   Microaccéléromètre selon la revendication 1, caractérisé en ce que les bras de suspension sont colinéaires.

3.   Microaccéléromètre selon la revendication 1 ou 2, caractérisé en ce que les bras de suspension ont sensiblement l'épaisseur de ladite plaque mince et en ce que les lames de résonateur ont une épaisseur fortement réduite par rapport à l'épaisseur de ladite plaque mince.

4.   Microaccéléromètre selon la revendication 3, caractérisé en ce que la plaque mince est une plaque de silicium.

5.   Microaccéléromètre selon la revendication 3, caractérisé en ce que la plaque mince est une plaque de quartz.

6.   Procédé de fabrication d'un microaccéléromètre à résonateurs sensible à des accélérations dans une première direction (x) formé à partir d'une plaque mince dont le plan comprend la première direction (x) et une deuxième direction (y) perpendiculaire à la première et est orthogonal à une troisième direction (z), comportant un cadre (10), une masse sismique (M), deux bras de suspension (S1, S2) entre le cadre et la masse, ces bras étant rigides dans la troisième direction et souples dans la première direction, deux lames formant résonateurs (R1, R2) s'étendant entre le cadre et la masse selon la première direction, caractérisé en ce que :

   ladite plaque mince est constituée d'un sandwich comprenant une première plaquette (20) d'un premier matériau revêtue d'une couche mince d'un deuxième matériau (21) et d'une couche mince d'un troisième matériau (22),
   la masse et le cadre sont gravés dans l'ensemble de la plaque mince,
   les suspensions sont gravées dans la première plaquette, et
   les résonateurs sont gravés dans la couche mince du troisième matériau.

7.   Procédé de fabrication d'un microaccéléromètre selon la revendication 6, caractérisé en ce que les premier et troisième matériaux sont du silicium et le deuxième matériau est de l'oxyde de silicium.

**Claims**

1.   A resonator microaccelerometer sensitive to accelerations along a first direction (x), formed from a thin plate whose plane comprises the first direction (x) and a second direction (y) perpendicular to the first direction and that is orthogonal with a third direction ( z), comprising:

   a fixed frame (10);
   a seismic mass (M);
   two hanging legs (S1, S2) between the frame and the mass, said legs being rigid along the third direction and flexible along the first direction;
   two resonator beams (R1, R2) extending between the frame and the mass along the first direction;

   characterized in that:

   the hanging legs (S1, S2) extend substantially along the second direction, each leg being directed toward the center of gravity of the mass, symmetrically with respect to this center; and
   the resonator beams (R1, R2) are parallel, but non collinear, and are symmetrical with respect to the center of gravity of the mass.

2. The microaccelerometer of claim 1, characterized in that the hanging legs are collinear.

3. The microaccelerometer of claim 1 or 2, characterized in that the thickness of the hanging legs is substantially the same as the thickness of the thin plate, and the resonator beams are much thinner than said thin plate.

4. The microaccelerometer of claim 3, characterized in that the thin plate is a silicon plate.

5. The microaccelerometer of claim 3, characterized in that the thin plate is a quartz plate.

6. A process for fabricating a resonator microaccelerometer sensitive to accelerations along a first direction (x), formed from a thin plate whose plane comprises the first direction (x) and a second direction (y) perpendicular to the first one and is orthogonal to a third direction (z), comprising a frame (10); a seismic mass (M); two hanging legs (S1, S2) between the frame and the mass, said legs being rigid along the third direction and flexible along the first direction; and two resonator beams (R1, R2) extending between the frame and the mass along the first direction; characterized in that:

said thin plate is constituted by a sandwich comprising a first plate (20) of a first material coated with a thin layer (21) of a second material, and a thin layer (22) of a third material; the mass and the frame are etched throughout the thin plate; the hanging legs are etched in the first plate; and the resonator beams are etched in the thin layer of the third material.

7. The process of claim 6, wherein the first and third materials are silicon and the second material is silicon oxide.

**Patentansprüche**

1. Resonator-Mikrobeschleunigungsmessaufnehmer, der für Beschleunigungen in einer ersten Richtung (x) empfindlich ist, gebildet von einer dünnen Platte, deren Ebene die erste Richtung und eine zweite Richtung (y) senkrecht zur ersten Richtung und orthogonal zu einer dritten Richtung (z) umfaßt, aufweisend: einen festen Rahmen (10); eine seismische Masse (M); zwei zwischen dem Rahmen und der Masse hängende Arme (S1, S2), wobei die Arme in der dritten Richtung starr sind und in der ersten Richtung flexibel sind; und zwei Resonatorträger (R1, R2), die sich entlang der ersten Richtung zwischen dem Rahmen und der Masse erstrecken; dadurch **gekennzeichnet**, daß sich die hängenden Arme (S1, S2) im wesentlichen entlang der zweiten Richtung erstrecken, wobei jeder Arm zum Gravitationszentrum der Masse und symmetrisch bezüglich dieses Zentrums ausgerichtet ist; und daß die Resonatorträger (R1, R2) parallel, aber nicht kollinear und symmetrisch bezüglich des Gravitationszentrums der Masse sind.

2. Mikrobeschleunigungsmessaufnehmer nach Anspruch 1, dadurch **gekennzeichnet**, daß die hängenden Arme kollinear sind.

3. Mikrobeschleunigungsmessaufnehmer nach Anspruch 1 oder 2, dadurch **gekennzeichnet**, daß die Dicke der hängenden Arme und die Dicke der dünnen Platte im wesentlichen gleich sind, wobei die Resonatorsträger viel dünner sind als die dünne Platte.

4. Mikrobeschleunigungsmessaufnehmer nach Anspruch 3, dadurch **gekennzeichnet**, daß die dünne Platte als Siliziumplatte ausgebildet ist.

5. Mikrobeschleunigungsmessaufnehmer nach Anspruch 3, dadurch **gekennzeichnet**, daß die dünne Platte als Quarzplatte ausgebildet ist.

6. Verfahren zur Herstellung eines für Beschleunigungen in einer ersten Richtung (x) empfindlichen Resonator-Mikrobeschleunigungsmessaufnehmers, gebildet von einer dünnen Platte, deren Ebene die erste Richtung und eine zweite Richtung (y) senkrecht zur ersten und orthogonal zu einer dritten Richtung (z) aufweist, umfassend: einen Rahmen (10); eine seismische Masse (M); zwei zwischen dem Rahmen und der Masse hängende Arme (S1, S2), wobei die Arme in der dritten Richtung starr sind und in der ersten Richtung flexibel sind; und zwei Resonatorträger (R1, R2), die sich entlang der ersten Richtung zwischen dem Rahmen und der Masse erstrecken; dadurch **gekennzeichnet**, daß die dünne Platte aus einer Schichtanordnung gebildet wird, die eine erste Platte (20) aus einem ersten Material aufweist, welches mit einer dünnen Schicht (21) aus einem zweiten Material und einer dünnen Schicht (22) aus einem dritten Material beschichtet ist; daß die Masse und der Rahmen durch die dünne Platte hindurchgeätzt werden; daß die hängenden Arme in die erste Platte geätzt werden; und daß die Resonatorträger in die dünne Schicht aus dem dritten Material geätzt werden.

7. Verfahren nach Anspruch 6, wobei das erste und das dritte Material Silizium und das zweite Material Siliziumoxid sind.

Fig IA

Fig IB

Fig IC

Fig 2A

Fig 2B

Fig 3A

Fig 3B

Fig 3C

R1  S1

B          B

S2  R2

Fig 4A

R2

22
21
20

10  M  S2  10

Fig 4B